(19) **Europäisches Patentamt European Patent Office Office européen des brevets**

(11) **EP 4 179 879 A1**

(12) **EUROPEAN PATENT APPLICATION**
published in accordance with Art. 153(4) EPC

(43) Date of publication:
**17.05.2023 Bulletin 2023/20**

(21) Application number: **21841965.3**

(22) Date of filing: **02.07.2021**

(51) International Patent Classification (IPC):
*A23J 3/00* (2006.01)    *A23J 3/16* (2006.01)
*A23J 3/26* (2006.01)

(52) Cooperative Patent Classification (CPC):
**A23J 3/26;** A23J 3/00; A23J 3/16

(86) International application number:
**PCT/JP2021/025068**

(87) International publication number:
**WO 2022/014358 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.07.2020 JP 2020120185**

(71) Applicant: **Fuji Oil Holdings Inc.**
**Izumisano-shi, Osaka 598-8540 (JP)**

(72) Inventor: **HASHIMOTO, Shuzo**
**Izumisano-shi, Osaka 598-8540 (JP)**

(74) Representative: **Boult Wade Tennant LLP**
**Salisbury Square House**
**8 Salisbury Square**
**London EC4Y 8AP (GB)**

(54) **METHOD FOR PRODUCING TEXTURED PROTEIN MATERIAL AND TEXTURED PROTEIN MATERIAL**

(57)    The present invention addresses the problem of providing a textured protein material which can enhance the fibrous texture of a processed food such as a product including meat or fish meat or a product including a vegetable raw material as a substitute therefor, has a high speed of water absorption, and can be used with ease. In this invention, it was found that a textured protein material having a favorable fibrous texture and a high speed of water absorption can be produced through the following steps (A) to (C), namely: (A) introducing a raw material including a protein raw material and water in an extruder, kneading and pressurizing and heating the raw material, and extruding the raw material under normal pressure from a die placed at an outlet of the extruder to organize the raw material and yield an organized product having a water content of 15-70 wt%; (B) cutting the organized product obtained in the step (A) perpendicularly to the direction of extrusion; and (C) slicing the organized product obtained in the step (B) into a flat shape using a circular slicer of a horizontal rotation type.

[Fig. 1]

**Description**

Technical Field

The present invention relates to a method for producing a textured protein material having a fiber length and the textured protein material. In particular, the present invention relates to a method for producing a textured protein material that achieves both high water absorption rate and long fiber length.

Background Art

A textured protein material obtained by swelling a texture of a raw material mixture, which contains a vegetable protein raw material such as soybean and wheat as a main raw material, kneaded with an extruder is conventionally processed so that the textured protein material has an elasticity similar to the livestock meat as a kind of "textured protein material". And, the textured protein material is widely used as a raw material for producing a processed food using livestock meat such as hamburger steak, meatball, gyoza (Chinese-style dumpling), steamed meat bun, shumai (Chinese-style steamed meat dumpling), minced meat cutlet, croquette and soboro (minced meat). In addition, a textured protein material itself is often cooked directly and used as a meat alternative such as deep-fried chicken or char siu (Chinese-style barbecued pork). In recent years, a soy puff with a light texture (feeling) has been increasingly used for cereal bar and granola.

In recent years, patent applications have been filed for combining a protein raw material with an auxiliary raw material to create a textured protein material having a characteristic food texture (feeling). The applicant also patented a technique capable of adding an oat fiber as an auxiliary raw material to realize a textured protein material having a more appropriate hardness and a meat-like texture (feeling) with a meat-like loosening feeling (Patent Document 1).

The textured protein material is usually produced by introducing a raw material containing water and a powder raw material such as a protein raw material into an extruder, kneading and pressurizing and heating the raw material mixture, extruding the raw material mixture under normal pressure from a die installed at an outlet of the extruder to be texturized, and drying the obtained product.

Many of the textured soybean proteins have a grain shape, and the grain shape is roughly divided into two types. These are a granular shape in which a material extruded from a die is used as it is and a fine shape processed using a pulverizer after being extruded from a die. The former is mainly used for providing the chewability of the final product, and the latter is mainly used for providing softness and juicy feeling.

In addition, it is also possible to produce a dense textured product having a long fiber length by combining a divalent metal or an alkali salt and concentrated soybean protein or isolated soybean protein. For example, it has been reported that a fibrous textured protein is obtained by adding lecithin or a metal salt to a plant-derived protein, water and oil (Patent Document 2).

In addition, for a method for producing a textured protein material by adding water to a soybean-derived raw material and extruding it under pressure and heating, a method of producing a textured protein material having a fibrous texture (feeling) characterized by using a divalent metal compound and an organic acid in combination has been reported, and a product having a fibrous texture (feeling) has been produced using the finding (Patent Document 3).

Normally, a textured protein material is often used in a state in which water is added to cause the textured protein material to absorb water, and is softened. However, since these textured protein materials having a fibrous texture (feeling) have dense texture, they are difficult to absorb water at the time of actually producing a final product, and are rehydrated with hot water or rehydrated over a long time of about half a day.

Prior Art Documents

Patent Documents

Patent Document 1: JP 5794373 B
Patent Document 2: JP S55-61767 A
Patent Document 3: JP 2011-072230 A

Disclosure of Invention

Technical Problem

As applications of the textured protein material having a fibrous texture (feeling) described above, it is desirable to use the textured protein material in the fibrous texture (feeling) enhancement of a livestock meat processed product such as chicken nugget, and a meat-like food texture (feeling) product using plant meat for replacing an animal food with a plant-derived raw material, which is a recent trend.

Basically, this textured protein material is often used in a state in which water is added to cause the textured protein material to absorb water, and is softened, but since the time for water absorption is long, it is very difficult to use the textured protein material due to recent labor shortage, and the textured protein material is not often used at present. For example, when the textured protein material having a fibrous texture is rehydrated with hot water, it takes about 20 to 40 minutes. In recent production lines, this water absorption time lowers productivity.

Furthermore, when the textured protein material rehydrated with hot water is mixed with meat, it is necessary to cool the textured protein material previously rehydrated with hot water to 10°C or lower in order to avoid denaturation of the meat.

In addition, in the case of attempting to absorb water with ordinary temperature water in order to shorten the cooling time, it may take about half a day, which is very inconvenient. That is, a material having a short water absorption time even when water is absorbed in ordinary temperature water is required.

Furthermore, the textured protein material having a fibrous food feeling needs to be strongly pulverized with a cutter after absorbing water. A step of mixing into a dough after pulverization is normal, and one step needs to be added in a production line. In the recent trend of labor saving, the addition of one step has been getting stricter, and the productivity has been significantly lowered. In addition, there is also a disadvantage that the fibers of the textured protein material produced so as to have high-quality fibers are lost by pulverization. There is a need for a material that imparts a high-quality fibrous feeling after water absorption and has a short water absorption time at normal temperature.

In order to increase the speed of water absorption, there is a method of pulverizing so as to form fine flakes immediately after extrusion from an extruder. For example, an existing pulverization method using Comitrol Processor (URSCHEL Japan Co., Ltd.) may be used, but in this case, the fibers are cut and shortened, and the fibrous feeling is not reinforced. Therefore, it has been desired to develop a continuous production method that significantly increases the rate of water absorption while maintaining the fiber length.

Therefore, an object of the present invention is to provide a textured protein material that may enhance the fibrous feeling of a processed food such as a product using livestock meat or fish meat or a product obtained by substituting these with a plant-derived material, and that has a high water absorption rate and may be easily used.

Solution to Problem

As a result of intensive studies on the above problems, the present inventor has found that a textured protein material produced by the following steps (A) to (C):

(A) a step of introducing a raw material containing a protein raw material and water into an extruder, kneading the raw material, and pressurizing and heating the raw material, and extruding the raw material under normal pressure from a die installed at an outlet of the extruder to texturize the raw material, thereby obtaining a textured product having a moisture content of 15 to 70 wt%,
(B) a step of cutting the textured product obtained in (A) perpendicularly to the extrusion direction, and
(C) a step of slicing the textured product obtained in (B) into a flat shape using a horizontal rotation type circular slicer, has a good fibrous feeling and a high water absorption rate, and thus has completed the present invention.

That is, the present invention relates to:

(1) a method for producing a textured protein material, including the following steps (A) to (C):

(A) a step of introducing a raw material containing a protein raw material and water into an extruder, kneading the raw material, and pressurizing and heating the raw material, and extruding the raw material under normal pressure from a die installed at an outlet of the extruder to texturize the raw material, thereby obtaining a textured product having a moisture content of 15 to 70 wt%;
(B) a step of cutting the textured product obtained in (A) perpendicularly to an extrusion direction; and
(C) a step of slicing the textured product obtained in (B) into a flat shape using a horizontal rotation type circular slicer (1),

wherein the circular slicer (1) includes an annular cutting head (2) and an impeller assembly (3) that is inside the cutting head (2), wherein the annular cutting head (2) and the impeller assembly (3) are coaxially disposed on the same axis (4), wherein the impeller assembly (3) rotates around the axis (4), and wherein a blade (5) is attached to the cutting head (2);

(2) the method for producing a textured protein material of (1), wherein, in the step (C), the blade (5) of the circular slicer is attached so as to extend radially inward opposite to a direction (7) in which the impeller assembly rotates;

(3) the method for producing a textured protein material of (1), wherein, in the step (B), the textured product is cut so that a length (10) in the extrusion direction is 2 times or more a length (11) of the longest portion of a cross section in a direction perpendicular to the extrusion direction;

(4) the method for producing a textured protein material of (2), wherein, in the step (B), the textured product is cut so that a length (10) in the extrusion direction is 2 times or more a length (11) of the longest portion of a cross section in a direction perpendicular to the extrusion direction;

(5) the method for producing a textured protein material of (3), wherein, in the step (B), the textured product is cut so that the length (10) of the textured product in the extrusion direction is 10 to 200 mm;

(6) the method for producing a textured protein material of (4), wherein, in the step (B), the textured product material is cut so that the length (10) of the textured product in the extrusion direction is 10 to 200 mm;

(7) the method for producing a textured protein material of (1), wherein, in the step (C), the textured product is sliced into a thickness of 1 mm or more;

(8) the method for producing a textured protein material of (2), wherein, in the step (C), the textured product is sliced into a thickness of 1 mm or more;

(9) The method for producing a textured protein material of (3), wherein, in the step (C), the textured product is sliced into a thickness of 1 mm or more;

(10) the method for producing a textured protein material of (4), wherein, in the step (C), the textured product is sliced into a thickness of 1 mm or more;

(11) the method for producing a textured protein material of (5), wherein, in the step (C), the textured product is sliced into a thickness of 1 mm or more;

(12) the method for producing a textured protein material of (6), wherein, in the step (C), the textured product is sliced into a thickness of 1 mm or more;

(13) the method for producing a textured protein material of (1), wherein a protein content in the protein raw material is 35 to 95 wt% in terms of solid content;

(14) a textured protein material having the following characteristics (a) to (d):

(a) having a protein content of 35 to 95 wt% in solids,
(b) having a flat shape in which a length (10) in an extrusion direction is 10 to 200 mm, the textured protein material has been sliced, and a thickness (16) after the slicing is 1 mm or more and 8 mm or less,
(c) 3 minutes after adding ordinary temperature water at 25°C to 6 times its own weight, it absorbs water 2 times or more its own weight, and
(d) a fibrous texture inside the textured protein material is exposed on a surface;

(15) a meat alternative containing the textured protein material of (14).

Further, in other words, the present invention relates to:

(16) a method for producing a textured protein material, including the following steps (A) to (C):

(A) a step of introducing a raw material containing a protein raw material and water into an extruder, kneading the raw material, and pressurizing and heating the raw material, and extruding the raw material under normal pressure from a die installed at an outlet of the extruder to texturize the raw material, thereby obtaining a textured product having a moisture content of 15 to 70 wt%;
(B) a step of cutting the textured product obtained in (A) perpendicularly to an extrusion direction; and
(C) a step of slicing the textured product obtained in (B) into a flat shape using a horizontal rotation type circular slicer (1),
wherein the circular slicer (1) includes an annular cutting head (2) and an impeller assembly (3) that is inside the cutting head (2), wherein the annular cutting head (2) and the impeller assembly (3) are coaxially disposed on the same axis (4), wherein the impeller assembly (3) rotates around the axis (4), and wherein a blade (5) is attached to the cutting head (2);

(17) the method for producing a textured protein material of (16), wherein, in the step (C), the blade (5) of the circular slicer is attached so as to extend radially inward opposite to the direction (7) in which the impeller assembly rotates;

(18) the method for producing a textured protein material of (16) or (17), wherein, in the step (B), the textured product is cut so that the length (10) in the extrusion direction is 2 times or more the length (11) of the longest portion of the cross section in the direction perpendicular to the extrusion direction;

(19) the method for producing a textured protein material of (18), wherein, in the step (B), the textured product is cut so that the length (10) of the textured product in the extrusion direction is 10 to 200 mm;

(20) the method for producing a textured protein material of any one of (16) to (19), wherein, in the step (C), the textured product is sliced into a thickness of 1 mm or more;

(21) the method for producing a textured protein material of any one of (16) to (20), wherein the protein content in the protein raw material is 35 to 95 wt% in terms of solid content;

(22) a textured protein material having the following characteristics (a) to (d):

(a) having a protein content of 35 to 95 wt% in solids,

(b) having a flat shape in which a length (10) in an extrusion direction is 10 to 200 mm, the textured protein material has been sliced, and a thickness (16) after the slicing is 1 mm or more and 8 mm or less,

(c) 3 minutes after adding ordinary temperature water at 25°C to 6 times its own weight, it absorbs water 2 times or more its own weight, and

(d) a fibrous texture inside the textured protein material is exposed on a surface;

(23) a meat alternative containing the textured protein material of (22).

Patent Documents 2 and 3 describe methods for producing a textured protein having a fibrous texture (feeling), but it is considered that the textured protein material produced by these methods has a slower water absorption rate than the textured protein material of the present invention. In fact, a product was produced with a formulation similar to that of Patent Documents 2 and 3, but the water absorption rate was lower than that of the textured protein material of the present invention.

Effect of Invention

The present invention enables to provide a textured protein material which may be used as a fibrous feeling reinforcing material during production of a processed food product and is excellent in water absorption rate.

Brief Description of Drawings

[Fig. 1] Fig. 1 is a view illustrating a cutting head, an impeller assembly, and a blade of a horizontal rotation type circular slicer.

[Fig. 2] Fig. 2 is a view illustrating a relationship between the size of a die of an extruder and the number of times of slicing by a horizontal rotation type circular slicer.

[Fig. 3] Fig. 3 is a view illustrating the fiber direction of a textured product discharged from a die of an extruder.

[Fig. 4A] Fig. 4A is a view illustrating a relationship between the length in the extrusion direction of the textured product and the slice direction of the textured product by a horizontal rotation type circular slicer, and is a view illustrating that when the fiber in the extrusion direction is long, the textured product is cut in the same direction as the fiber.

[Fig. 4B] Fig. 4B is a view illustrating a relationship between the length in the extrusion direction of the textured product and the slice direction of the textured product by a horizontal rotation type circular slicer, and is a view illustrating that when the fiber in the extrusion direction is short, the textured product may not be cut in the same direction as the fiber.

[Fig. 5] Fig. 5 is a view illustrating the state of the inside of the slicer of the textured product when slicing is performed by a vertical rotation type slicer.

[Fig. 6A] Fig. 6A is a drawing-substituting photograph showing the water rehydrated state of a textured protein material of T-18 and T-20.

[Fig. 6B] Fig. 6B is a drawing-substituting photograph showing the fiber separated state of a textured protein material of T-18 and T-20.

[Fig. 7] Fig. 7 is a drawing-substituting photograph showing a micrograph of the state of the surface of a textured protein material.

Explanation of Reference Numeral

1 Horizontal rotation type circular slicer
2 Cutting head
3 Impeller assembly
4 Axis (axis of cutting head and axis of impeller assembly match)
5 Blade
6 Gap through which the textured protein material is discharged to the outside
7 Rotation direction of impeller assembly
8 Die
9 Textured product
10 Length of textured product in extrusion direction
11 Length of longest portion of cross section in a direction perpendicular to the extrusion direction
12 Cutting by slicer
13 Vertical rotation type slicer
14 Rotation direction of vertically rotation type slicer
15 Gravity center position of textured product
16 Thickness of textured protein material after slicing

Mode for Carrying Out the Invention

Hereinafter, embodiments of the present invention will be described in detail.

(Method for producing textured protein material)

The method for producing a textured protein material of the present invention includes the following steps (A) to (C).

(A) A step of introducing a raw material containing a protein raw material and water into an extruder, kneading the raw material, and pressurizing and heating the raw material, and extruding the raw material under normal pressure from a die installed at an outlet of the extruder to texturize the raw material, thereby obtaining a textured product having a moisture content of 15 to 70 wt%.
(B) A step of cutting the textured product obtained in (A) perpendicularly to an extrusion direction.
(C) A step of slicing the textured product obtained in (B) into a flat shape using a horizontal rotation type circular slicer (1).

In the method, the circular slicer (1) includes an annular cutting head (2) and an impeller assembly (3) that is inside the cutting head (2); the annular cutting head (2) and the impeller assembly (3) are coaxially disposed on the same axis (4); the impeller assembly (3) rotates around the axis (4); and a blade (5) is attached to the cutting head (2).
The textured protein material obtained by the above method has characteristics that the meat-like fibrous feeling is good and the water absorption rate is high, and there is an advantage that the textured protein material may be continuously produced.

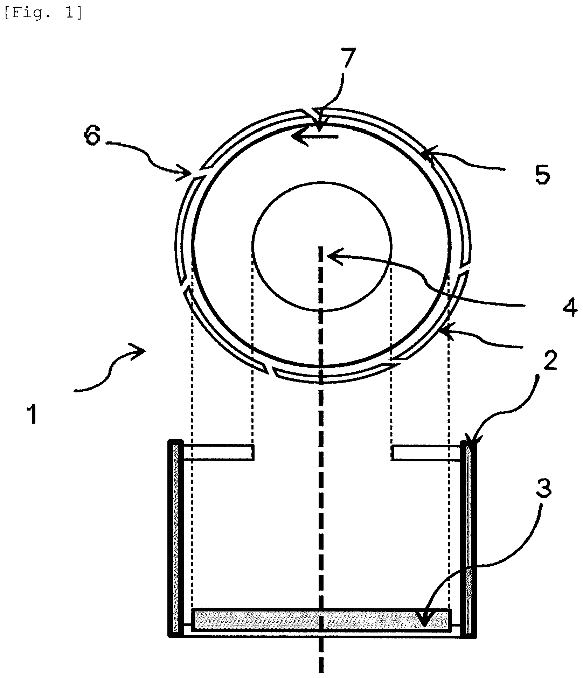

Fig. 1 is a view schematically illustrating a cutting head, an impeller assembly, a blade, and a gap through which a textured protein material is discharged to the outside of a horizontal rotation type circular slicer.
First, the step (A) will be described.
The texturizing method in the present invention is described.
First, a protein raw material such as defatted soybean is used as a main production raw material (texturizing raw material), and water and another appropriate raw material such as starch, fat and oil are introduced into an extruder, and the raw materials are kneaded with a screw in the apparatus under the condition that the inside of the apparatus is pressurized and heated. Thereafter, the formed kneaded product may be extruded under normal pressure from a hole in a portion called a "die" in an outlet portion of the apparatus to obtain a textured product.
In this method, when the kneaded product is extruded from a die under normal pressure, the texture is changed to a swollen textured product.
A textured protein material produced using defatted soybean or powdered soybean protein as a main raw material is generally also referred to as "granular soybean protein" or "soybean puff".

(Extruder)

The texturizing of the textured protein material of the present invention is performed using an extruder device. An extruder generally has a mechanism for feeding, kneading, pressurizing (compressing), and heating a raw material from a raw material supply port by a screw disposed in a barrel, and a die having holes of various shapes is attached to a barrel tip portion (outlet).

The extruder that may be used is not limited, and mono, bi, or tri or more-axial extruder may be used. Among them, a biaxial extruder may be suitably used.

(Operating conditions of extruder)

The operating conditions for supplying the raw material for producing the textured protein material to the extruder and extruding the raw material from the die under pressurized heating may be appropriately selected and adjusted based on known conditions. As a non-limiting example, as heating conditions, the temperature of the barrel tip is preferably 120 to 220°C, and more preferably 140 to 180°C.

As the pressing condition, the die pressure at the barrel tip is preferably 2 to 100 kg/cm$^2$, and more appropriately 5 to 40 kg/cm$^2$.

(Die)

In the textured product extruded through the die installed at an outlet of the extruder, the length (11) of the longest portion of the cut surface in the direction perpendicular to the extrusion direction is preferably at least 3 mm or more. The length is preferably 5 mm or more, and more preferably 8 mm or more.

In the present invention, the water absorption rate is greatly increased by exposing the inside of the textured product to the surface by a horizontal rotation type circular slicer described later. Therefore, the larger the number of times of slicing per textured product, the higher the water absorption rate because the inside of the textured product is exposed.

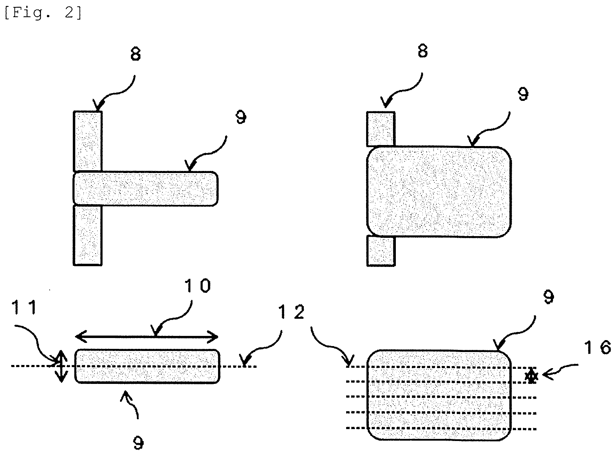

The larger the die, the greater the length (11) of the longest portion of the cross section, perpendicular to the extrusion direction of the textured product, and the greater the number of slices (right in Fig. 2).

Conversely, the smaller the die is, the smaller the length (11) of the longest portion of the cross section in the direction perpendicular to the extrusion direction of one textured product is (left in Fig. 2), and accordingly, the number of times of slicing with a slicer is also small.

In fact, in the study conducted by the inventor, a result is obtained that if the diameter of the die having a circular hole when the textured product is extruded from the extruder is reduced to about half, the thickness of the textured product per grain is adjusted to about half and cutting is performed with Comitrol Processor (URSCHEL Japan Co., Ltd.) used for production of a general flake-shaped granular plant-derived protein material, then, the water absorption amount by a water absorption measurement method described later is reduced by about 0.5 to 1.0 times by weight.

(Addition of water)

When the raw material of the textured protein material is supplied to an extruder, water is added. In the case of the method for producing a swollen textured protein material of the present invention, it is appropriate to add water so that the moisture content of the entire raw material supplied to an extruder is preferably 15 to 80 wt%, more preferably 15 to 65 wt%.

The water used in the present invention is not particularly limited, and an aqueous solvent containing a water-soluble component may be used as long as it does not affect swelling and flavor.

The moisture content of the textured product obtained by supplying the raw material for producing the textured protein material to an extruder and extruding the raw material is 15 to 70 wt%. The lower limit may be preferably 16 wt% or more or 17 wt% or more. The upper limit may be preferably 65 wt% or less, 60 wt% or less, 55 wt% or less, 50 wt% or less, 45 wt% or less, 40 wt% or less, 35 wt% or less, 30 wt% or less, or 25 wt% or less.

More specific examples include 15 to 70 wt%, 15 to 65 wt%, 15 to 60 wt%, 15 to 55 wt%, 15 to 50 wt%, 15 to 45 wt%, 15 to 40 wt%, 15 to 35 wt%, 15 to 30 wt%, 16 to 70 wt%, 16 to 65 wt%, 16 to 60 wt%, 16 to 55 wt%, 16 to 50 wt%, 16 to 45 wt%, 16 to 40 wt%, 16 to 35 wt%, 16 to 30 wt%, 17 to 70 wt%, 17 to 65 wt%, 17 to 70 wt%, 17 to 60 wt%, 17 to 55 wt%, 17 to 50 wt%, 17 to 45 wt%, 17 to 40 wt%, 17 to 35 wt%, and 17 to 30 wt%.

By setting the moisture content of the textured product within the above range, the slicing suitability of the textured product with a horizontal rotation type circular slicer described later becomes favorable.

(Protein raw material)

In the present invention, the "protein raw material" refers to a raw material that is a texturizing raw material to be introduced into an extruder in order to produce a textured protein material and contains a protein. Specifically, as one aspect, it is preferable to use a vegetable protein raw material.

The "vegetable protein raw material" is a plant-derived protein material, and examples thereof include a protein material derived from oil seed such as soybean, pea, green bean, chick bean, rapeseed, cotton seed, peanut, sesame, high-oleic safflower, sunflower, corn, safflower and coconut, and a protein material derived from grain seed such as rice, barley and wheat. The protein material is a pulverized product, an extracted protein, a concentrated protein or an isolated protein, of the plant. Examples thereof include rice glutelin, barley prolamin, wheat prolamin, wheat gluten, whole fat soybean flour, defatted soybean flour, concentrated soybean protein, isolated soybean protein, isolated pea protein and isolated green bean protein. As the vegetable protein raw material, in particular, a protein material derived from soybean as described in Examples and a protein material derived from oil seed which may be substituted therewith are preferable, and among the oil seed, a protein material derived from bean is more preferable.

Here, a typical and non-limiting production example of the isolated soybean protein using soybean as an example will be described below. Even when another plant-derived raw material is used, a plant-derived isolated protein may be produced according to the following production example.

I) Extraction step

Defatted soybean is used as a soybean raw material, and water is added thereto and the mixture is stirred to form a suspension (slurry), and the protein is extracted with water. The water may have a neutral to alkaline pH and may also contain a salt such as calcium chloride. The okara is separated by a solid-liquid separation means such as centrifugation to obtain a protein extract (so-called soy milk). The product which is heat-sterilized and spray-dried at this stage is a so-called defatted soy milk powder, and this may also be used as a powdery plant-derived protein material.

II) Acid precipitation step

Next, an acid such as hydrochloric acid and citric acid is added to the protein extract, the pH of the extract is adjusted to pH 4 to 5, which is the isoelectric point of the soybean protein, and the protein is insolubilized to cause acid precipitation. Next, a supernatant (so-called whey) containing a carbohydrate or ash which is an acid-soluble component is removed by a solid-liquid separation means such as centrifugation to recover an "acid precipitation curd" containing the acid-insoluble component. The material spray-dried at this stage is a so-called curd powder, and this may also be used as a powdery plant-derived protein material.

III) Neutralization step

Next, water is added again to the acid precipitation curd, and the curd is washed with water as necessary to obtain a "curd slurry". Then, the slurry is neutralized by adding an alkali such as sodium hydroxide and potassium hydroxide to obtain a "neutralized slurry".

IV) Sterilizing and powdering step

Next, the neutralized slurry is heat-sterilized, spray-dried with a spray dryer, and subjected to fluidized bed granulation as necessary to obtain isolated soybean protein.

However, the isolated soybean protein in the present invention is not limited to those produced in the above production examples. As the soybean raw material, various soybean raw materials such as whole fat soybean, partially defatted soybean may be used instead of defatted soybean. Various extraction conditions and devices may be applied to the extraction unit. As a method for removing whey from the protein extract, membrane concentration with an ultrafiltration membrane may be performed instead of acid precipitation, and in this case, a neutralization step is not necessarily required. Furthermore, the soybean protein may also be produced by applying a method of previously washing the soybean raw material with acidic water or alcohol to remove whey, and then extracting protein with neutral or alkaline water. In addition, it is also possible to partially hydrolyze the protein by causing a protease to act on the protein solution at any of the above stages.

The protein raw material used in the present invention is granular. That is, it may be powder or granular. However, in the case of granular particles, the particle size is preferably as small as possible. The particle size is preferably 2 mm or less, and more preferably 1 mm or less.

The protein content in the solid content in the protein raw material is preferably as high as possible in order to satisfy the protein content of the textured protein material. Specifically, the protein content is preferably 35 wt% or more, and more preferably may be 40 wt% or more, 50 wt% or more, 60 wt% or more, 70 wt% or more, 80 wt% or more, or 85 wt% or more. The protein content may be 95 wt% or less, 92 wt% or less, or 91 wt% or less.

The protein content is expressed in terms of solid content by determining the total nitrogen amount in the sample by the Kjeldahl method, multiplying it by a coefficient of 6.25, and measuring it as a percentage with respect to the sample.

In addition, it is preferable to blend a divalent metal compound as a raw material at the time of texturizing from the viewpoint of further improving the fibrous feeling of the textured protein material. The content of the divalent metal compound in the dry solid content in the textured protein material is preferably 0.01 to 2.5 wt%, and more preferably 0.25 to 1.0 wt% as a metal. When the amount of the divalent metal compound is too large or too small, it may be difficult to obtain a desired fibrous texture (feeling).

As the divalent metal compound, one kind or two or more kinds of calcium compounds and magnesium compounds may be used. When one kind of divalent metal compound is used, a calcium compound is preferable.

The calcium compound used in the present invention is preferably a calcium salt. For example, calcium sulfate, calcium carbonate, calcium chloride or calcium hydroxide may be preferably used. Calcium sulfate is more preferable.

When a magnesium compound is used, the magnesium compound may be used as a salt such as a sulfate, a carbonate and a chloride, and a hydroxide as with the calcium compound, and among them, magnesium sulfate is more preferable.

(Other texturizing raw materials)

As the texturizing raw material of the present invention, various other auxiliary raw materials may be added. For example, fat and oil, alkali metal salt such as common salt, animal protein such as albumen and casein, carbohydrate such as starch and polysaccharide, dietary fiber, emulsifier, flavor, and other known additives may be appropriately added as long as the effects of the present invention are not hindered. However, in a case where a plant-based textured protein material is to be mentioned, it is preferable that the animal protein is not included.

In general, the mixing ratio of the protein raw material in the solid content of the raw material for producing the textured protein material may be appropriately set in consideration of the balance with other raw materials depending on the required quality, and is preferably as high as possible in order to satisfy the protein content of the textured protein material. Therefore, the protein raw material is blended so that the protein content in the whole raw material is 35 wt% or more. Preferably, the protein content may be 40 wt% or more, 45 wt% or more, 50 wt% or more, 55 wt% or more, or 60 wt% or more. The upper limit may be 95 wt%, and may be 90 wt% or less, 80 wt% or less, or 70 wt% or less.

Next, the step (B) will be described.

The textured product texturized by an extruder is cut perpendicular to the extrusion direction by the extruder.

The textured product texturized by an extruder is preferably cut so that the length (10) in the extrusion direction is 2 times or more the length (11) of the longest portion of the cross section in the direction perpendicular to the extrusion direction of the textured product. It is preferable that cutting is performed so as to be preferably 2.5 times or more, and more preferably 3 times or more. It is preferable that cutting is performed so that the specific length in the extrusion direction is 10 mm to 200 mm. It is preferable that cutting is performed so as to be preferably 15 mm to 100 mm, and more preferably 20 mm to 80 mm.

Thus, there are two reasons why the length (10) of the textured product in the extrusion direction is preferably 2 times or more the length (11) of the longest portion of the cross section in the direction perpendicular to the extrusion direction of the textured product.

The first reason is that it is necessary to increase the fiber length in order to impart a meat-like fibrous feeling.

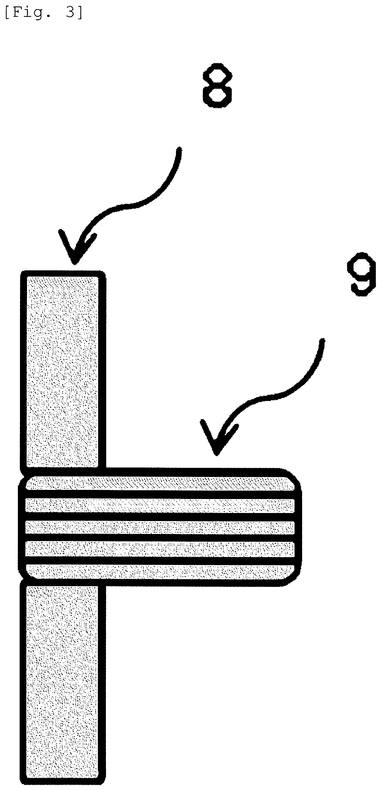

Specifically, in the extruder, the direction of the fibers of the textured product is formed in the direction perpendicular to the surface of a die. That is, the direction of the fibers of the textured product is the same as the extrusion direction by the extruder. Therefore, it is necessary to increase the length in the extrusion direction in order to increase the fiber length of the textured product (Fig. 3).

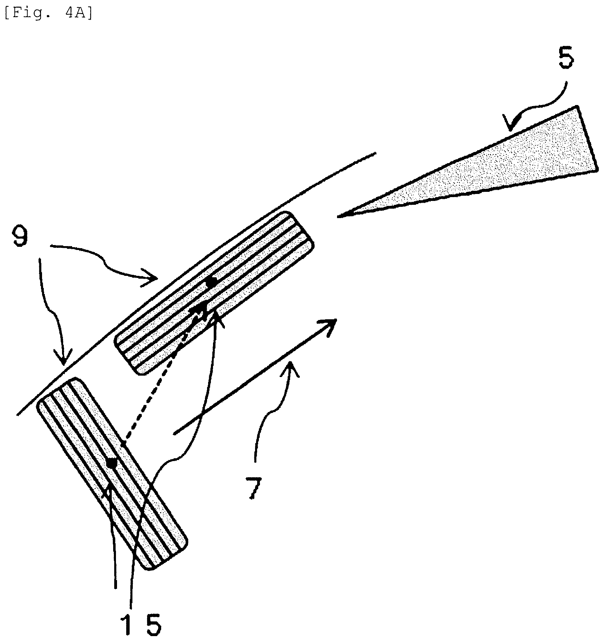

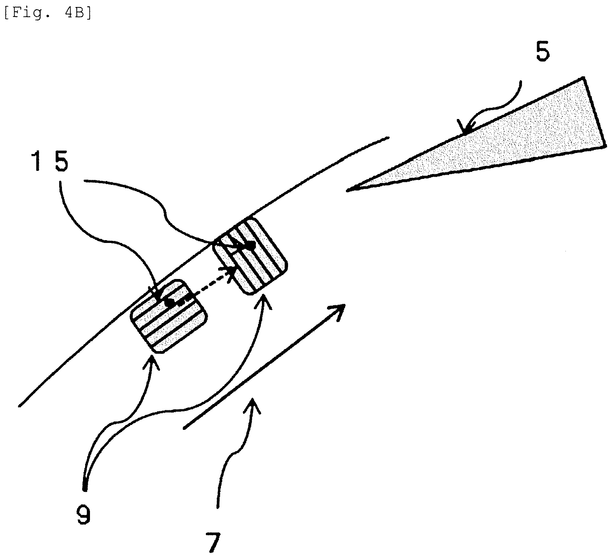

The second reason is that the slicer in the next step slices the fibers of the textured product in the same direction. When the fiber is cut into a long textured product in the extrusion direction, a centrifugal force acts on the textured product by a horizontal rotation type circular slicer, so that the textured product may be sliced in the same direction as the fiber (Fig. 4A). However, when the fiber is cut into a short textured product in the extrusion direction, the textured product may not be sliced in the same direction as the fiber by a horizontal rotation type circular slicer (Fig. 4B).

(Horizontal rotation type circular slicer)

The slicer used in the present invention is a horizontal rotation type circular slicer (1) and is shown in Fig. 1. The circular slicer has an annular cutting head (2). An impeller assembly (3) is provided inside the cutting head. The central axis (4) of the cutting head and the axis (4) of the impeller assembly are coaxial. The impeller assembly rotates around this axis, but the cutting head is fixed. A blade (5) is attached to the cutting head, and slices the textured protein material. The blade of the horizontal rotation type circular slicer is mounted so as to extend radially inward opposite to the direction (7) in which the impeller assembly rotates. The textured protein material sliced by the blade passes through the gap (6) of the cutting head and is discharged to the outside.

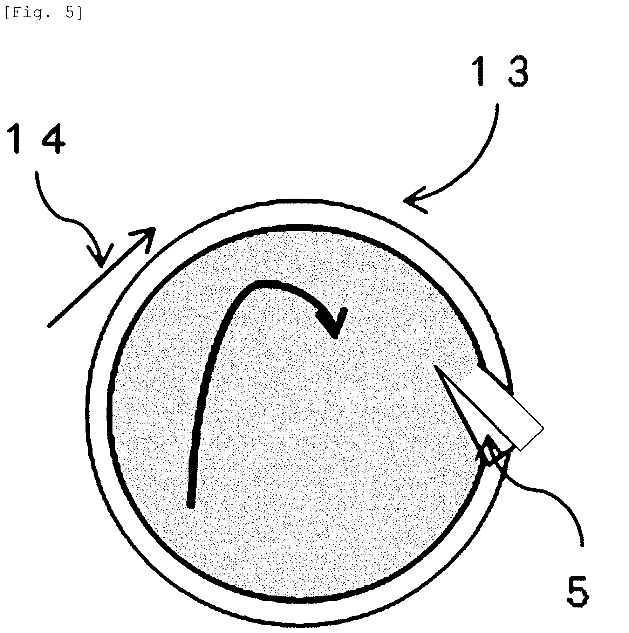

In addition, in the case of the vertical rotation type circular slicer, when the textured product passes through the uppermost portion of the slicer, the textured product may fall by its own weight, and the textured product may not be sliced well or may not be sliced well in the fiber direction (Fig. 5).

Meanwhile, when a horizontal rotation type circular slicer is used, a centrifugal force acts, and slicing may be performed in the same direction as the fiber direction. The width of the gap (6) of the cutting head may be adjusted, but when the width becomes less than 1 mm, the load on the machine becomes large, which is not suitable for continuous production. Furthermore, since the thickness is very thin, the fiber is cut halfway and the fiber length is shortened, which is not consistent with keeping the fiber length long, which is an object of the present invention. Therefore, it is essential that the width of the gap (6) of the cutting head is 1 mm or more.

The thickness (16) of the textured protein material obtained by slicing the textured product with the horizontal rotation type circular slicer after slicing is 1 mm or more, preferably 1.5 mm or more, and more preferably 2 mm or more. The upper limit is 8 mm or less, preferably 6 mm or less, and more preferably 4 mm or less.

Examples of such a horizontal rotation type circular slicer include a slicer (Model CC) manufactured by URSCHEL Japan Co., Ltd.

The textured protein material obtained by slicing with the horizontal rotation type circular slicer may be dried, but the conditions may be appropriately selected and adjusted based on known conditions. By way of a non-limiting example, the drying is suitably performed using a fluidized bed dryer by exposing the textured product to hot air at 60°C to 100°C for 1 minute to 30 minutes. The moisture content of the textured protein material obtained after drying is preferably 15 wt% or less, more preferably 1 to 12 wt%, and still more preferably 1 to 10 wt% from the viewpoint of preservability.

The thus obtained textured protein material of the present invention has the following characteristics.

(a) The protein content is 35 to 90 wt% in solids.
(b) It has a flat shape in which the length (10) in the extrusion direction is 2 times or more the length (11) of the longest portion of the cross section in the direction perpendicular to the extrusion direction of the textured product, and the length (10) in the extrusion direction is 10 to 200 mm, and the textured protein material has been sliced, and the thickness (16) after the slicing is 1 mm or more and 8 mm or less.
(c) The water absorption rate 3 minutes after adding ordinary temperature water at 25°C to 6 times its own weight is 2 times or more its own weight.
(d) The fibrous texture inside the textured protein material is exposed on the surface.

The protein content of (a) of the textured protein material of the present invention is expressed in terms of solid content by determining the total nitrogen amount in the sample by the Kjeldahl method, multiplying it by a coefficient of 6.25, and measuring it as a percentage with respect to the sample.

The "length in the extrusion direction" in (b) indicates the length of the textured product shown in (10) of Fig. 2. The "length of longest portion of cross section in a direction perpendicular to the extrusion direction" indicates the length of the cross section of the textured product shown in (11) of Fig. 2.

The method for measuring the water absorption rate in (c) will be described later.

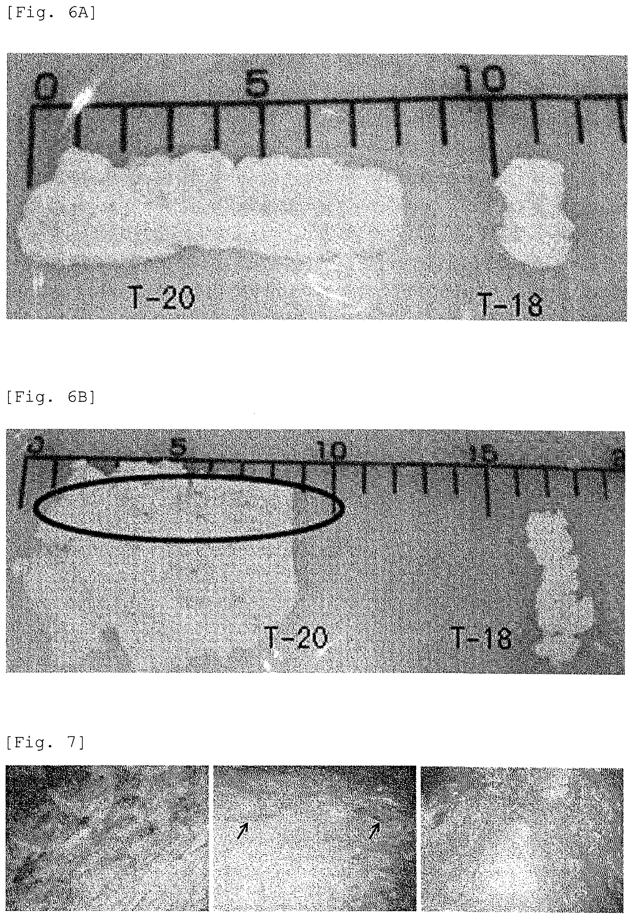

Further, regarding the requirement of (d), a micrograph of the texture of the textured protein material of the present invention is shown in Fig. 7.

The micrograph is observed at a magnification of 20 times using a digital microscope VHX-900 F manufactured by Keyence Corporation.

As a comparison, a micrograph of the texture of the textured protein material before being sliced by a horizontal rotation type circular slicer is also shown.

The left photograph of Fig. 7 is a micrograph of the textured protein material before slicing with the horizontal rotation type circular slicer, and the middle photograph of Fig. 7 is a micrograph of the textured protein material of the present invention sliced with the horizontal rotation type circular slicer.

In the photograph in the center of Fig. 7, the fibrous texture is exposed on the surface, and bubbles are observed in some places (arrow portions in the drawing), whereas in the photograph on the left of Fig. 7, bubbles are not observed, and it is observed that a dense texture is formed.

The photograph on the right of Fig. 7 is an observation of the state of the texture when 3 times the amount of water is added to the textured protein material of the present invention. The textured protein material on the right of Fig. 7 is a material having a thickness (16) of about 2 mm after slicing, but it may be seen that fibers formed at the time of structuring are not cut and remain even in the thinness. That is, it can be seen that cutting can be performed in substantially the same direction as the fiber direction at the time of texturizing.

(Application)

Since the textured protein material obtained by the present invention has long fibers and a high water absorption rate, it may be used for a product using livestock meat or fish meat or a plant-derived meat alternative product.

For example, it may be used as a fibrous feeling reinforcing material for a processed food such as hamburger steak, meatball, gyoza (Chinese-style dumpling), steamed meat bun, shumai (Chinese-style steamed meat dumpling), minced meat cutlet, croquette, soboro (minced meat) and tsukune (chicken meatball).

In the production step of the processed food, it is necessary to make a dough as fast as possible and continuously cook (such as baking and deep-frying) the dough. The textured protein material of the present invention having a high water absorption rate may be used for the production of the processed food.

In addition, the textured protein material of the present invention may also be directly cooked and used as a raw material of livestock meat-like product such as side dish and sliced meat-like product like a char siu.

Examples

Hereinafter, the present invention will be described by describing Examples. In the Examples, "part(s)" and "%" mean on a weight basis unless otherwise specified.

(Production Example 1)

Seven times the amount of water was added to defatted soybean, the pH was adjusted to 7 with sodium hydroxide, these were mixed and extracted, and the precipitate was removed by centrifugation, and thereafter, five times the amount of water of the defatted soybean was further added to the residue, and the resulting mixture was treated in the same manner to obtain an extract. The pH was adjusted to 4.5 with hydrochloric acid to precipitate a protein, and the protein was recovered by centrifugation. After water was added, the mixture was neutralized with sodium hydroxide and spray-dried at a hot air temperature of 180°C and a waste air temperature of 70°C to obtain powdery isolated soybean protein. The protein content of this isolated soybean protein was about 90% in terms of solid content.

(Examples 1 to 3, Comparative Examples 1 to 2)

A raw material containing a protein raw material and water was introduced into an extruder, kneaded, and pressurized and heated, and the raw material was extruded under normal pressure from a die installed at an outlet of the extruder to be texturized, thereby obtaining a textured product. The textured product was cut so as to have a length (10) of 60 mm in the extrusion direction thereof. The length (11) of the longest portion of the cross section in the direction perpendicular to the extrusion direction of the textured product was 10 mm. The extruder used was a biaxial extruder, the operation was performed under the control of 80°C to 100°C on the inlet side, 140°C to 180°C on the outlet side, and a pressure of the die at the barrel tip of 5 to 40 kg/cm$^2$. The water addition was performed such that the moisture content of the whole raw material was 15 to 80%. A part of the textured product was subjected to a dryer, and after adjusting the moisture content, the textured product was subjected to a horizontal rotation type circular slicer to confirm whether or not the textured product was suitable for slicing.

The suitability in the Examples means that the textured product obtained by the extruder is put into a horizontal rotation type circular slicer, and the textured product cut is discharged from the gap (6) of the cutting head. The evaluation criteria are shown below.

<Evaluation criteria>

• Evaluation of slicing suitability of horizontal rotation type circular slicer

    ∘: Sliced textured product is obtained from the cutting head gap (6).
    ✕: Sliced textured product cannot be obtained from the cutting head gap (6).

When the evaluation was ∘, it was determined that the horizontal rotation type circular slicer was suitable for slicing.

Textured products with adjusted moisture content values as shown in Table 1 below were prepared, and the slicing suitability was confirmed. At T-1 and T-2, the moisture content was adjusted using a dryer.

The moisture content was measured with a heating type moisture meter (MX-50, manufactured by A & D Company, Limited).

(Table 1)

|  | T-1 | T-2 | T-3 | T-4 | T-5 |
|---|---|---|---|---|---|
|  | Comparative Example 1 | Comparative Example 2 | Example 1 | Example 2 | Example 3 |
| Isolated soybean protein of Production Example 1 (parts) | 75 | 75 | 75 | 75 | 75 |
| Corn starch (parts) | 25 | 25 | 25 | 25 | 25 |
| Water content of textured product (%) | 10 | 12 | 17 | 20 | 40 |
| Suitability evaluation | × | × | ○ | ○ | ○ |

For T-1 and T-2, when the textured product hits the blade attached to the gap portion of the cutting head, the textured product was often repelled, and the textured product was not sliced well. Therefore, it was found that there is no slicing suitability for a textured product having low moisture content.

(Examples 4 to 5 and Comparative Example 3)

From a die installed at an outlet of the extruder, raw materials (isolated soybean protein and corn starch of Production Example 1) described in Table 2 were extruded under normal pressure to obtain a textured product. Each textured product was cut so that the length (10) in the extrusion direction was 60 mm. The length (11) of the longest portion of the cross section in the direction perpendicular to the extrusion direction of each textured product was 10 mm. Thereafter, textured protein materials having three kinds of thicknesses were prepared using a horizontal rotation type circular slicer (URSCHEL Japan Co., Ltd., MODEL CC, hereinafter, the same machine is used for the description of the horizontal rotation type circular slicer.) (T-6 to T-8). The thickness was adjusted by changing the size of the gap (6) of the cutting head. As the extruder, a biaxial extruder was used, and the operation was performed while the temperature on the inlet side was controlled to 80°C to 100°C, the temperature on the outlet side was controlled to 140°C to 180°C, and the pressure of the die at the barrel tip was controlled to 5 to 40 kg/cm$^2$. These textured protein materials were dried in a fluidized bed drier to obtain a textured protein material having a moisture content of 6%.

The average value of the thicknesses (16) after 10 slices of each of the textured protein materials T-6, T-7, and T-8 was measured using a caliper and found to be 0.79, 1.82, and 3.89 mm, respectively.

The particle size of each of the obtained textured protein materials was further measured using experimental sieves (4 mesh and 10 mesh sieves) conforming to JIS standards.

In addition, regarding the evaluation on the fibrous feeling, five panelists who were skilled in sensory evaluation of the fibrous feeling of the textured protein material tasted and evaluated. Sensory evaluation related to the fibrous feeling was evaluated based on the following evaluation criteria, and was determined by consensus of panelists. The results are shown in Table 2.

<Evaluation Criteria>

• Sensory evaluation on fibrous feeling

⊙: Fibrous feeling is very strong
∘: Fibrous feeling is strong
△: Fibrous feeling is felt
×: No fibrous feeling is felt

When the evaluation was ⊙, ∘, or △, it was judged that there was a fibrous feeling and good.

(Table 2)

| | T-6 | T-7 | T-8 |
|---|---|---|---|
| | Comparative Example 3 | Example 4 | Example 5 |
| Isolated soybean protein of Production Example 1 (parts) | 80 | 80 | 80 |
| Corn starch (parts) | 20 | 20 | 20 |
| Moisture content of textured product after extrusion from die (%) | 20 | 20 | 20 |
| Average of thickness after slicing (mm) | 0.79 | 1.82 | 3.89 |
| On 4 mesh (%) | 6.6 | 42 | 56.6 |
| Pass 10 mesh (%) | 24.6 | 4 | 1.2 |
| Sensory evaluation | × | ○ | ○ |

From the results in Table 2, for T-6 having a thickness (16) after slicing of less than 1 mm, the fibrous feeling was not felt. This was considered to be because there were many small particles passing through 10 meshes (mesh opening: 1.7 mm) as can be seen from the particle size analysis of T-6. Therefore, it was found that it is essential to set the thickness (16) after slicing to 1 mm or more in order to obtain a textured protein material having a fibrous feeling since the fibrous feeling was not felt when the production was targeted at a thickness of less than 1 mm.

(Example 6 and Comparative Example 4)

It was verified whether the fibrous feeling was felt by a method other than the pulverization with the horizontal rotation type circular slicer. From a die installed at an outlet of the extruder, raw materials described in Table 3 were extruded under normal pressure to obtain a textured product. The textured product was cut so as to have a length (10) of 20 to 40 mm in the extrusion direction. The length (11) of the longest portion of the cross section in the direction perpendicular to the extrusion direction of each textured product was 10 mm. The extruder was operated under the same conditions as in Example 4. Thereafter, textured protein materials were prepared using a horizontal rotation type circular slicer Comitrol Processor (URSCHEL Japan Co., Ltd.) (T-9, T-10). The slit of the stationary blade of the Comitrol Processor was set to about 5 × 9 mm. In general, the thickness (16) after slicing was about 2 mm, which was about the same.

The textured protein material was dried in a fluidized bed drier to obtain a textured protein material having a moisture content of 6%.

The particle size of each textured protein material was measured and sensory evaluation was performed in the same manner as in Example 4.

The results are shown in Table 3.

(Table 3)

| | T-9 | T-10 |
|---|---|---|
| | Comparative Example 4 | Example 6 |
| Isolated soybean protein of Production Example 1 (parts) | 75 | 75 |
| Corn starch (parts) | 25 | 25 |
| Moisture content of textured product after extrusion from die (%) | 20 | 20 |
| Used apparatus | Comitrol Processor | Horizontal rotation type circular slicer |
| Pass 4 mesh (%) | 62.7 | 19.4 |
| Sensory evaluation | × | ○ |

T-9 prepared using the Comitrol Processor passed at a rate of 62.7% through 4 mesh. Therefore, 62.7% had a size smaller than 4.75 mm × 4.75 mm.

On the other hand, for T-10, 19.4% of the fibers passed through 4.75 mm × 4.75 mm, which indicated that the amount of a textured protein material having a fine size was lower as compared with the case of Comitrol Processor, and the fibers were not cut. Also in the sensory evaluation, the pulverized product in the Comitrol Processor was evaluated to have no fibrous feeling as compared with the pulverized product in the horizontal rotation type circular slicer. As described above, it was found that it was difficult to give a fibrous feeling with a general crusher, and it is necessary to slice with a horizontal rotation type circular slicer.

(Examples 7 to 11)

Next, the texture (feeling) was compared depending on the difference in protein content.

From a die installed at an outlet of the extruder, raw materials described in Table 4 containing soybean proteins having different protein contents in terms of dry matter were extruded under normal pressure to obtain a textured product. The textured product was cut so that the length (10) in the extrusion direction thereof was 40 mm. The length (11) of the longest portion of the cross section in the direction perpendicular to the extrusion direction of each textured product was 10 mm. Thereafter, textured protein materials having a thickness (16) after slicing of about 2 mm were prepared using a horizontal rotation type circular slicer (T-11 to T-15). These textured protein materials were dried in a fluidized bed drier, and the moisture content was 6%. The extruder was operated under the same conditions as in Example 2. As for other materials to be combined with soybean protein, those that hardly affected swelling were selected from various other materials for each protein raw material and texturized.

In the evaluation of the fibrous feeling of the textured protein material, the evaluation was performed in the same manner as in Example 4 except that the textured protein materials remained on a 4-mesh sieve were used in order to compare the texture (feeling) depending on the protein content. The results are shown in Table 4.

(Table 4)

|  | T-11 | T-12 | T-13 | T-14 | T-15 |
|---|---|---|---|---|---|
|  | Example 7 | Example 8 | Example 9 | Example 10 | Example 11 |
| Defatted soybean (protein content = 52%) (parts) | 80 | 100 | - | - | - |
| Dietary fiber (parts) | 20 | - | - | - | - |
| Isolated soybean protein (protein content = 90%) of Production Example 1 (parts) | - | - | 75 | 75 | 82 |
| Corn starch (parts) | - | - | 25 | 25 | 18 |
| Calcium sulfate (divalent metal equivalent amount) (parts) | - | - | - | 3 (0.88) | 3 (0.88) |
| Moisture content after extrusion from die (%) | 20 | 20 | 20 | 20 | 20 |
| Protein content of textured protein material (%, in terms of solid content) | 42 | 53 | 68 | 68 | 73 |
| Sensory evaluation | △ | ○ | ○ | ⊙ | ⊙ |

It is apparent from the past verification that the higher the protein content of the textured protein material, the stronger the fibrous feeling is felt, but in this study, it was confirmed that the fibrous feeling was felt as shown in Table 4 when the textured protein material was processed into a texture having a thickness (16) of about 2 mm after slicing using a horizontal rotation type circular slicer. That is, it was confirmed that the protein fibers remained without being cut halfway in the main processing.

In addition, by adding a divalent metal compound (calcium sulfate) in production as for T-14 and T-15, the fibrous feeling of the textured protein material became stronger and was good.

Meanwhile, when the protein content of the textured protein material in terms of solid content was 42%, the fibrous feeling was felt slightly weak (Example 7).

(Example 12, Comparative Example 5)

Raw materials described in Table 5 were extruded from an extruder to obtain a textured product. The textured product was cut so that the length (10) in the extrusion direction thereof was 40 mm. The length (11) of the longest portion of the cross section in the direction perpendicular to the extrusion direction of each textured product was 10 mm. Thereafter, the slicing effect was confirmed with a vertical rotation type slicer (URSCHEL Japan Co., Ltd., Dicer) or a horizontal rotation type circular slicer. As the extruder, a biaxial extruder was used, and the operation was performed while the temperature on the inlet side was controlled to 80°C to 100°C, the temperature on the outlet side was controlled to 140°C to 180°C, and the pressure of the die at the barrel tip was controlled to 5 to 40 kg/cm$^2$. Even in the vertical rotation type slicer, the slit was adjusted so that the thickness after slicing was about 2 mm. Also one sliced with a horizontal rotation type circular slicer had a thickness (16) of about 2 mm after slicing. The textured protein material prepared with the vertical rotation type slicer was defined as T-16, and the textured protein material prepared with the horizontal rotation type circular slicer was defined as T-17. These textured protein materials were dried in a fluidized bed drier, and the moisture content was 6%.

In the vertical rotation type slicer, due to the vertical rotation, the textured protein material dropped by its own weight when passing through the uppermost portion, and the textured product remained (Fig. 5). In addition, the fiber length was not long, and the particle size was very small in the vertical rotation type slicer. The particle size was measured using an experimental sieve conforming to JIS standard.

As listed in Table 5, with respect to the particle size of the obtained product, the proportion remaining on the upper part of the sieve of 4 mesh (mesh opening: 4.75 mm) was 24% in the case of the vertical rotation type slicer, whereas the proportion was 63% in the case of the horizontal rotation type circular slicer, thus, there were many products where the particle size was large, that is, the fiber length was long. In addition, with respect to those passed through a sieve of 10 mesh (mesh opening: 1.7 mm), the proportion was 21.8% in the vertical rotation type slicer, whereas the proportion was 1.1% in the horizontal rotation type circular slicer, thus, there were little products wherein the particle size was small, that is, the fiber length was short, for the horizontal rotation type circular slicer.

Therefore, it was found that the textured protein material of the present invention was not obtained using the vertical rotation type slicer, and the horizontal rotation type circular slicer was essential.

(Table 5)

| Formulation | | T-16 | T-17 |
|---|---|---|---|
| | | Comparative Example 5 | Example 12 |
| Defatted soybean (parts) | | 100 | 100 |
| Moisture content of textured product after extrusion from die (%) | | 20 | 20 |
| Used apparatus | | Vertical rotation type slicer | Horizontal rotation type circular slicer |
| Particle size | On 4 mesh (%) | 24 | 63 |
| | Pass 10 mesh (%) | 21.8 | 1.1 |

(Examples 13 to 14, Comparative Example 6)

In order to give a fibrous feeling of the textured protein material, it is necessary to slice the textured protein material with a horizontal rotation type circular slicer so that the fibers of the textured product extruded from the extruder remain.

Since a centrifugal force is applied in the horizontal rotation type circular slicer, it is necessary to align the fiber direction (that is, the extrusion direction of the textured product, the same applies to the following,) and the cutting direction using the centrifugal force. In this regard, a hypothesis was made that the fiber direction and the cutting direction were aligned by the action of centrifugal force by increasing the length of the textured product in the extrusion direction (Fig. 4A).

Fig. 4A illustrates a case where the length of the textured product in the extrusion direction is long. In this case, it is considered that the textured product moves toward the cutting head (2) by the centrifugal force of the far horizontal rotation type circular slicer, but the probability that the fiber direction of the textured product is directed toward the blade (5) attached to the cutting head is high, and the fiber direction of the textured product is aligned with the cutting direction of the horizontal rotation type circular slicer. When a centrifugal force is applied to the object, the gravity center (15) is pulled outward. Since the length in the extrusion direction is long, the center of gravity is near the center of the textured protein material. That is, the center of gravity is as close to the cutting head of the slicer as possible.

On the other hand, Fig. 4B shows a case where the length of the textured product in the extrusion direction is short. In this case, it is considered that when moved to the cutting head (2) side similarly, there is no long portion in the textured product, hence, the direction of the textured product in the fiber direction is not constant, and it is difficult to align the fiber direction of the textured product with the cutting direction of the horizontal rotation type circular slicer.

Therefore, in the same manner as in Example 2, the textured product extruded with an extruder was cut perpendicularly to the extrusion direction so that "Length (11) of longest portion of cross section in a direction perpendicular to the extrusion direction" : "Length (10) of textured product in extrusion direction" was 1 : 1, 1 : 2, and 1 : 8, to prepare each textured product. The "length (11) of longest portion of cross section in a direction perpendicular to the extrusion direction" was 10 mm. These were subjected to a horizontal rotation type circular slicer (MODEL CC) to prepare a textured protein material having a thickness (16) after slicing of about 2 mm. These textured protein materials were dried in a fluidized bed drier, and the moisture content was 6%.

Textured protein materials produced from those in which "Length (11) of longest portion of cross section in a direction perpendicular to the extrusion direction" : "Length (10) of textured product in extrusion direction" was 1 : 1, 1 : 2, and 1 : 8 were designated as T-18 (Comparative Example 6), T-19 (Example 13), and T-20 (Example 14), respectively. The lengths (10) of the textured protein material in the extrusion direction were 10 mm, 20 mm, and 80 mm for T-18, T-19, and T-20, respectively.

For each of the obtained textured protein materials, sensory evaluation of fibrous feeling was performed in the same manner as in Example 4.

In the sensory evaluation of the fibrous feeling, the strength of the fibrous feeling was evaluated, and the evaluation was also performed from the viewpoint of the number of times of mastication.

It is considered that if the cutting direction by the horizontal rotation type circular slicer is the same as the direction of the fibers of the textured product, the fibers become longer (Fig. 4A), and as the fibers become longer, the shearing by the teeth increases until the fibers are swallowed.

Meanwhile, it is considered that when the cutting direction is different from the fiber (Fig. 4B), shearing until swallowing is reduced because the fiber is short, and thus, the number of times of mastication is reduced.

Therefore, for the textured protein materials having different fiber lengths, the number of times of mastication taken until the same weight was swallowed was measured. Since the number of times of mastication varies for each panelist, it was verified by the ratio of the number of times of mastication. The results are shown in Table 6.

(Table 6)

|  | T-18 | T-19 | T-20 |
|---|---|---|---|
|  | Comparative Example 6 | Example 13 | Example 14 |
| Ratio of length | 1 : 1 | 1 : 2 | 1 : 8 |
| Sensory evaluation | × | Δ | ○ |
| Ratio of number of times of mastication | 1 | 1.36 | 1.56 |

As shown in Table 6, the number of times of mastication was larger and the fibrous feeling was more felt in the case of Ts-19 and 20 than in the case of T-18. In addition, in the sensory evaluation, the fibrous feeling was similarly felt. For T-18, the fibrous feeling was not felt, and as a hypothesis, it was necessary to increase the length of the textured product in the extrusion direction in order to cut in the same direction as the fiber. According to the number of times of mastication and sensory evaluation, it was found that the length (10) in the extrusion direction of the textured product needs to be 2 times or more the length (11) of the longest portion of the cross section in the direction perpendicular to the extrusion direction of the textured product.

(Example 15, Comparative Example 7)

From the result of Example 13, it was found that the length (10) in the extrusion direction of the textured product needs to be 2 times or more the length (11) of the longest portion of the cross section in the direction perpendicular to the extrusion direction of the textured product. However, for example, when the length (11) of the longest portion of the cross section in the direction perpendicular to the extrusion direction of the textured product is 1 mm, the length (10) of the textured product in the extrusion direction may be 2 mm, but in this case, the length (10) of the textured product in the extrusion direction is 2 mm at the maximum, and the fibrous feeling is not exhibited.

Therefore, it was verified how many mm the minimum length (10) of the textured product in the extrusion direction needs to be.

With respect to T-18 and T-20 used in Example 14, ordinary temperature water in an amount of 3 times its own weight was added to perform water rehydration, and then the fibers were crushed from above to be separated from each other (Comparative Example 7, Example 15). As shown in Fig. 6A, a fibrous texture was observed when the fibers were separated, and it was suggested that the fiber texture of the textured protein material processed into a flat shape using a horizontal rotation type circular slicer was not collapsed. Further, for T-20, the fiber textures are continuously connected, and are not cut halfway. (Black Circle Portion in Fig. 6B, etc.)

Meanwhile, with regard to the fibers of T-18, since the length (11) of the longest portion of the cross section in the direction perpendicular to the extrusion direction of the textured product was 10 mm, the length (10) in the extrusion direction was about 10 mm at the maximum.

It was considered that in the sensory evaluation described in paragraph 0064, the fibrous feeling of T-18 is not felt because the length of the textured product in the extrusion direction was short. On the other hand, it was considered that the fibrous feeling of T-20 was strongly felt because of the fiber structure as shown in Fig. 6.

As described above, it was found that the length (10) of the textured product in the extrusion direction needs to be 10 mm or more in order to feel the fibrous feeling.

(Example 16, Comparative Examples 8 to 9)

For T-20 at which a strong fibrous feeling was felt, the water absorption rate was measured according to the following method for measuring the water absorption rate.

In addition, at each water absorption time (1, 3, 5, 10 min), sensory evaluation was performed from the viewpoint of whether there was a hard portion that was not hydrated. In this sensory evaluation, five skilled panelists performed evaluation based on the following evaluation criteria, and the evaluation was determined by consensus of the panelists.

In addition, for comparison, measurement of the water absorption rate and sensory evaluation were similarly performed for a flat-shaped product not subjected to slicing (Thickness 2 to 3 mm, T-21) and a thicker shaped product (Thickness 10 mm, T-22) which were extruded with a slit-shaped die attached to the outlet of the extruder. The results are shown in Table 7.

(Method for measuring water absorption rate)

To a cylindrical container was added 30 g of a textured protein material, 6 times the amount of water at 25°C was added, the material was allowed to absorb water for 1, 3, 5, and 10 minutes, and then the entire container was turned over on a 30 mesh sieve (mesh opening: 500 $\mu$m) inclined at about 25°, the water was drained for 5 minutes, then, the weight of the textured protein material was measured, and the water absorption rate was calculated by the following formula.

```
(Formula)

     Water absorption rate = (weight after water absorption

  for each time - 30)/30
```

(Sensory evaluation criteria)

Evaluation of presence or absence of unhydrated hard part

∘: Sufficient water absorption and hydration

✕: There is a hard part and it is not sufficiently hydrated.

(Table 7)

| Water absorption time (min) | T-20 | | T-21 | | T-22 | |
|---|---|---|---|---|---|---|
| | Example 16 | | Comparative Example 8 | | Comparative Example 9 | |
| | Water absorption rate (times) | Sensory evaluation | Water absorption rate (times) | Sensory evaluation | Water absorption rate (times) | Sensory evaluation |
| 1 | 2.44 | ○ | 0.72 | × | 0.69 | × |
| 3 | 3.29 | ○ | 1.09 | × | 1.03 | × |
| 5 | 3.5 | ○ | 1.13 | × | 1.26 | × |
| 10 | 3.61 | ○ | 1.54 | × | 1.52 | × |

As shown in Table 7, there was a clear difference in water absorption rate at the time point 1 minute after water absorption. The difference between T-20 and T-21 or T-22 is the presence or absence of processing with a horizontal rotation type circular slicer. Therefore, it was found that the water absorption rate was greatly increased by processing with a horizontal rotation type circular slicer.

(Examples 17 to 19, Comparative Example 10)

Furthermore, it was verified how many times the weight of water absorbed by T-20 should be "Sufficient water absorption and hydration". To 10 g of T-20 was added water at 25°C in an amount of 1.5, 2.0, 2.5, or 3.0 times its own weight, and the mixture was allowed to stand for 20 minutes to sufficiently absorb water, and then sensory evaluation was performed. In this sensory evaluation, five skilled panelists tasted the sample, and the sample was determined by consensus of the panelists based on the following evaluation criteria. The results are shown in Table 8.

Evaluation criteria for whether there is no unhydrated hard part

○: Sufficient water absorption, hydration, and no hard part.
×: There is a hard part and it is not sufficiently hydrated.

(Table 8)

| | T-20 | | | |
|---|---|---|---|---|
| | Comparative Example 10 | Example 17 | Example 18 | Example 19 |
| Water absorption rate | 1.5 | 2.0 | 2.5 | 3.0 |
| Sensory evaluation | × | ○ | ○ | ○ |

From the above results, it was found that in the present textured protein material, the state of being sufficiently hydrated means a state of being "capable of absorbing water 2 times or more of its own weight ". Therefore, it was found that the present textured protein material sufficiently absorbed water and hydrated 3 minutes after adding ordinary temperature water at 25°C in an amount 6 times its own weight, and had a meat-like fiber food feeling capable of absorbing water 2 times or more its own weight.

(Example 20, Comparative Example 11)

Furthermore, application evaluation was also performed for T-18 and T-20. The present textured protein material was characterized by supple fibrous feeling, and retained food feeling similar to that of chicken fiber. Whether or not the fibrous feeling is maintained in Tsukune (chicken meatball) was examined by utilizing the fiber. For comparison, Tsukune was also experimentally produced by an existing method. For this comparative group, a commercially available textured protein product (Apex 950, manufactured by Fuji Oil Co., Ltd.) was used. For the formulation of Tsukune, the formulation in Table 9 below was used.

(Table 9)

|  | Comparative Example 11 | Example 20 | Reference Example |
|---|---|---|---|
| Chicken breast minced meat (parts) | 44 | 44 | 44 |
| T-18 (parts) | 8 | - | - |
| T-20 (parts) | - | 8 | - |
| Apex 950 (parts) | - | - | 8 |
| Water addition (parts) | 24 | 24 | 24 |
| Raw onion (parts) | 18.2 | 18.2 | 18.2 |
| Bread crumb (parts) | 4 | 4 | 4 |
| Spices (parts) | 1.8 | 1.8 | 1.8 |
| Total (parts) | 100 | 100 | 100 |

Experimental production method:

(1) Water was added to T-18 and T-20, and the mixture was allowed to stand for 3 minutes to absorb water.
(2) T-18 and T-20 were put into a kneader, and the fibers were separated by light stirring, then the remaining materials were added, and the mixture was uniformly stirred, and then 30 g of Tsukune was molded.
(3) Steaming and heating were performed at 95°C for 8 minutes, and freezing was performed.

Reference Example

(1) Water was added to Apex 950 on the day before experimental production, and the mixture was allowed to stand in a refrigerator overnight to absorb water.
(2) Apex 950 having absorbed water was pulverized with a tabletop cutter.
(3) The materials were charged into a kneader and uniformly stirred to form 30 g of Tsukune.
(4) Steaming and heating were performed at 95°C for 8 minutes, and freezing was performed.

For each of the obtained samples, the sensory evaluation of the fibrous feeling of the textured protein material was performed in the same manner as in Example 4, and the number of times of mastication was evaluated in the same manner as in Example 13. The results are shown in Table 10.

(Table 10)

|  | Comparative Example 11 | Example 20 | Reference Example |
|---|---|---|---|
| Sensory evaluation | × | ○ | Δ |
| Ratio of number of times of mastication | 1 | 1.27 | 1.2 |

As shown in Table 10, Example 20 in which T-20 having a ratio of "Length (11) of longest portion of cross section in a direction perpendicular to the extrusion direction" : "Length (10) in extrusion direction of textured product " of 1 : 8 was blended showed the increased number of times of mastication of all the panelists, and had a ratio of the number of times of mastication of 1.27 times, compared to Comparative Example 11 in which T-18 having a ratio of "Length (11) of longest portion of cross section in a direction perpendicular to the extrusion direction" : "Length (10) in extrusion direction of textured product " of 1 : 1 was blended. This is considered to be because the fiber length was long, leading to an increase in the number of times of mastication.
Meanwhile, the fiber length of Apex 950 was about 2 times that of T-18, and the number of times of mastication increased also in the reference example, but the number of times of mastication was slightly smaller than that in Example 20. In addition, in the case of the reference example, it was necessary to add water from the previous day and to absorb water for a long time, and it was necessary to pulverize using a cutter in advance, thus, the work was complicated. The present textured protein material produced using a horizontal rotation type circular slicer has a long fiber length, has a fibrous feeling, and in addition, has a short water absorption time, so that it can be said that the complexity of the work is solved by the material.

**Claims**

1. A method for producing a textured protein material, comprising the following steps (A) to (C):

   (A) a step of introducing a raw material comprising a protein raw material and water into an extruder, kneading the raw material, and pressurizing and heating the raw material, and extruding the raw material under normal pressure from a die installed at an outlet of the extruder to texturize the raw material, thereby obtaining a textured product having a moisture content of 15 to 70 wt%;
   (B) a step of cutting the textured product obtained in (A) perpendicularly to an extrusion direction; and
   (C) a step of slicing the textured product obtained in (B) into a flat shape using a horizontal rotation type circular slicer (1),
   wherein the circular slicer (1) comprises an annular cutting head (2) and an impeller assembly (3) that is inside the cutting head (2), wherein the annular cutting head (2) and the impeller assembly (3) are coaxially disposed on the same axis (4), wherein the impeller assembly (3) rotates around the axis (4), and wherein a blade (5) is attached to the cutting head (2).

2. The method for producing a textured protein material according to claim 1, wherein, in the step (C), the blade (5) of the circular slicer is attached so as to extend radially inward opposite to a direction (7) in which the impeller assembly rotates.

3. The method for producing a textured protein material according to claim 1, wherein, in the step (B), the textured product is cut so that a length (10) in the extrusion direction is 2 times or more a length (11) of the longest portion of a cross section in a direction perpendicular to the extrusion direction.

4. The method for producing a textured protein material according to claim 2, wherein, in the step (B), the textured product is cut so that a length (10) in the extrusion direction is 2 times or more a length (11) of the longest portion of a cross section in a direction perpendicular to the extrusion direction.

5. The method for producing a textured protein material according to claim 3, wherein, in the step (B), the textured product is cut so that the length (10) of the textured product in the extrusion direction is 10 to 200 mm.

6. The method for producing a textured protein material according to claim 4, wherein, in the step (B), the textured product material is cut so that the length (10) of the textured product in the extrusion direction is 10 to 200 mm.

7. The method for producing a textured protein material according to claim 1, wherein, in the step (C), the textured product is sliced into a thickness of 1 mm or more.

8. The method for producing a textured protein material according to claim 2, wherein, in the step (C), the textured product is sliced into a thickness of 1 mm or more.

9. The method for producing a textured protein material according to claim 3, wherein, in the step (C), the textured product is sliced into a thickness of 1 mm or more.

10. The method for producing a textured protein material according to claim 4, wherein, in the step (C), the textured product is sliced into a thickness of 1 mm or more.

11. The method for producing a textured protein material according to claim 5, wherein, in the step (C), the textured product is sliced into a thickness of 1 mm or more.

12. The method for producing a textured protein material according to claim 6, wherein, in the step (C), the textured product is sliced into a thickness of 1 mm or more.

**13.** The method for producing a textured protein material according to claim 1, wherein a protein content in the protein raw material is 35 to 95 wt% in terms of solid content.

**14.** A textured protein material having the following characteristics (a) to (d):

(a) having a protein content of 35 to 95 wt% in solids,
(b) having a flat shape in which a length (10) in an extrusion direction is 10 to 200 mm, the textured protein material has been sliced, and a thickness (16) after the slicing is 1 mm or more and 8 mm or less,
(c) 3 minutes after adding ordinary temperature water at 25°C to 6 times its own weight, it absorbs water 2 times or more its own weight, and
(d) a fibrous structure inside the textured protein material is exposed on a surface.

**15.** A meat alternative comprising the textured protein material according to claim 14.

[Fig. 1]

[Fig. 2]

[Fig. 3]

[Fig. 4A]

[Fig. 4B]

[Fig. 5]

[Fig. 6A]

[Fig. 6B]

[Fig. 7]

## INTERNATIONAL SEARCH REPORT

| | International application No. |
|---|---|
| | PCT/JP2021/025068 |

**A. CLASSIFICATION OF SUBJECT MATTER**
A23J 3/00(2006.01)n; A23J 3/16(2006.01)n; A23J 3/26(2006.01)i
FI: A23J3/26 501; A23J3/00 502; A23J3/16
According to International Patent Classification (IPC) or to both national classification and IPC

**B. FIELDS SEARCHED**

Minimum documentation searched (classification system followed by classification symbols)
A23J3/00-3/34,A23L13/00-17/50

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
Google, JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2010-535029 A (SOLAE, LLC) 18 November 2010 (2010-11-18) | 1–15 |
| A | JP 54-27888 B2 (AJINOMOTO CO., INC.) 12 September 1979 (1979-09-12) | 1–15 |
| A | JP 47-28169 A (A. E. STALEY MANUFACTURING COMPANY) 31 October 1972 (1972-10-31) | 1–15 |
| A | JP 2017-175943 A (NISSIN FOODS HOLDINGS CO., LTD.) 05 October 2017 (2017-10-05) | 1–15 |
| A | JP 2008-11727 A (FUJI OIL CO., LTD.) 24 January 2008 (2008-01-24) | 1–15 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 August 2021 (31.08.2021) | 07 September 2021 (07.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 4 179 879 A1**

<table>
<tr><td colspan="2" align="center"><b>INTERNATIONAL SEARCH REPORT</b></td><td>International application No.<br>PCT/JP2021/025068</td></tr>
<tr><td colspan="3">C (Continuation).   DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>A</td><td>Microfilm of the specification and drawings annexed to the request of Japanese Utility Model Application No. 16729/1990 (Laid-open No. 108396/1991) (KOBE STEEL, LTD.) 07 November 1991 (1991-11-07)</td><td>1-15</td></tr>
</table>

Form PCT/ISA/210 (continuation of second sheet) (January 2015)

30

**INTERNATIONAL SEARCH REPORT**
Information on patent family members

International application No.

PCT/JP2021/025068

| Patent Documents referred in the Report | Publication Date | Patent Family | Publication Date |
|---|---|---|---|
| JP 2010-535029 A | 18 Nov. 2010 | US 2009/0123629 A1<br>WO 2009/018548 A2<br>CN 101790316 A | |
| JP 54-27888 B2 | 12 Sep. 1979 | (Family: none) | |
| JP 47-28169 A | 31 Oct. 1972 | (Family: none) | |
| JP 2017-175943 A | 05 Oct. 2017 | US 2019/0082716 A1<br>WO 2017/169207 A1<br>EP 3437482 A1<br>CN 109152390 A | |
| JP 2008-11727 A | 24 Jan. 2008 | (Family: none) | |
| JP 3-108396 U1 | 07 Nov. 1991 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5794373 B
- JP 55061767 A

- JP 2011072230 A